# EUROPEAN PATENT APPLICATION

(11) **EP 1 049 344 A1**
(43) Date of publication of application: **02.11.2000**
(21) Application number: 99303280.4
(22) Date of filing: 27.04.1999
(51) Int. Cl.: H04Q 7/30

(54) **Base station equipment for a mobile telecommunications network**

(71) Applicant: LUCENT TECHNOLOGIES INC., Murray Hill, New Jersey 07974-0636 (US)
(72) Inventor: Messenger, Michael Peter, Stroud, Gloucestershire GL6 8QN (GB); Sudera, Suresh, Pinner, Middx. HA5 3SJ (GB)
(74) Representative: Williams, David John

(57) **Abstract**

Radio units are proposed having an enclosure containing a radio transmitter, a radio receiver and a processor for communicating with mobile terminals via the transmitter and the receiver and with a switching centre via an uplink data port and a transmission line having a nominal impedance. It is further proposed to provide a downlink data port connected directly by at least one pair of conductors to the uplink data port so that two or more radio units can be daisy chained together. A downlink port of a first radio unit would be connected to an uplink port of a second radio unit, so that the second can communicate with the switching centre via the first

The invention is based on the recognition that at the end of the daisy chain, the at least one pair of conductors needs to be terminated in the nominal impedance of the transmission line or reflections will occur. It is desired that all radio units should be identical, in the sense that there is no desire to have a special radio unit to terminate a transmission line.

The last radio unit in the chain, being most remote in the chain from the switching centre, is disclosed having connected to its downlink port an adapter connecting the conductors in the or each pair with an impedance having the nominal impedance of the transmission line.

## Description

This invention relates to base station equipment for mobile telecommunications networks.

Radio units are proposed having an enclosure containing a radio transmitter, a radio receiver and a processor for communicating with mobile terminals via the transmitter and the receiver and with a switching centre via an uplink data port and a transmission line having a nominal impedance. It is further proposed to provide a downlink data port connected directly by at least one pair of conductors to the uplink data port so that two or more radio units can be daisy chained together. A downlink port of a first radio unit would be connected to an uplink port of a second radio unit, so that the second can communicate with the switching centre via the first

The invention is based on the recognition that at the end of the daisy chain, the at least on pair of conductors needs to be terminated in the nominal impedance of the transmission line or reflections will occur. It is desired that all radio units should be identical, in the sense that there is no desire to have a special radio unit to terminate a transmission line.

Against this background, in accordance with the invention, the last radio unit in the chain, being most remote in the chain from the switching centre, has connected to its downlink port an adapter connecting the conductors in the or each pair with an impedance having the nominal impedance of the transmission line.

This enables the transmission line to be terminated simply, without special a radio unit.

Preferably, the downlink port comprises a connector and the adapter has a complimentary connector.

In order to reduce the likelihood of error, the adapter carries an indication of the nominal impedance.

In the preferred embodiment, go and return data pairs in the uplink and downlink ports are interfaced by impedance matching networks, clock signal pairs in both ports being directly interconnected by a conductive pair.

The invention also extends to an adapter for use in the base station equipment of any preceding claim, comprising a connector having at least two pins interconnected by an impedance, and having no lead operative to connect any pin not so interconnected to any functional network.

One embodiment of the invention will now be described by way of example with reference to the accompanying drawings, in which:

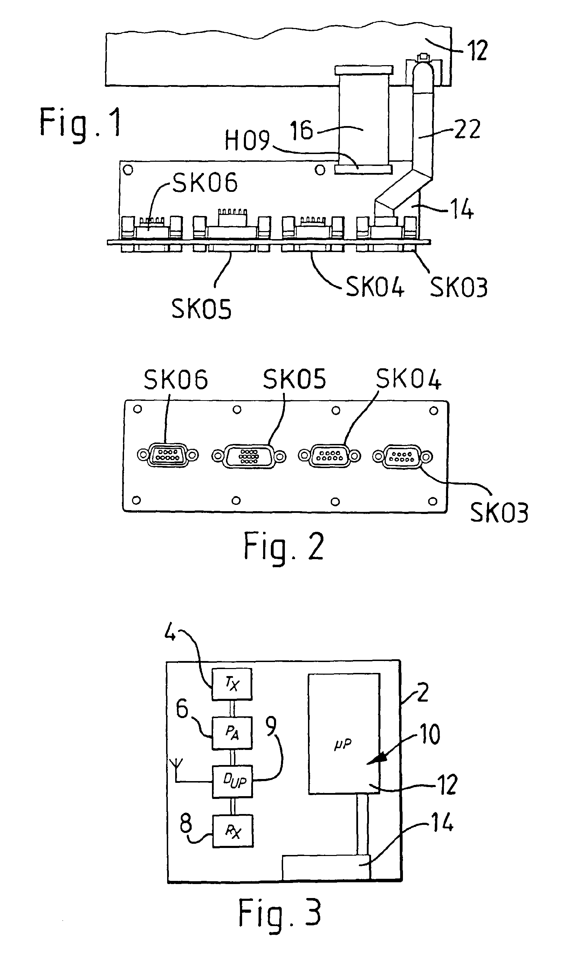

Figure 1 is a plan view of an interface unit and a processor board of base station radio unit embodying the invention;
Figure 2 is an end view of the interface unit of Figure 1;
Figure 3 is a block diagram of the radio unit;
Figure 4 is a schematic diagram of an adapter for use with the interface adapter of Figure 1;
Figure 5 is a pictorial view of the adapter of Figure 2;

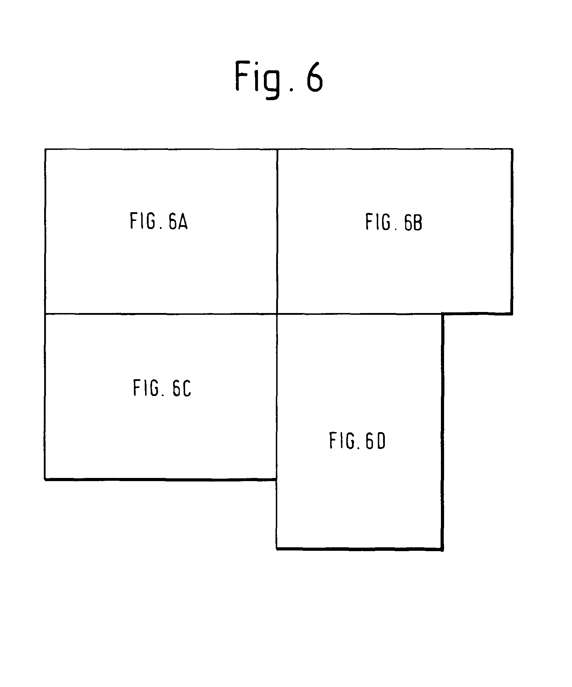

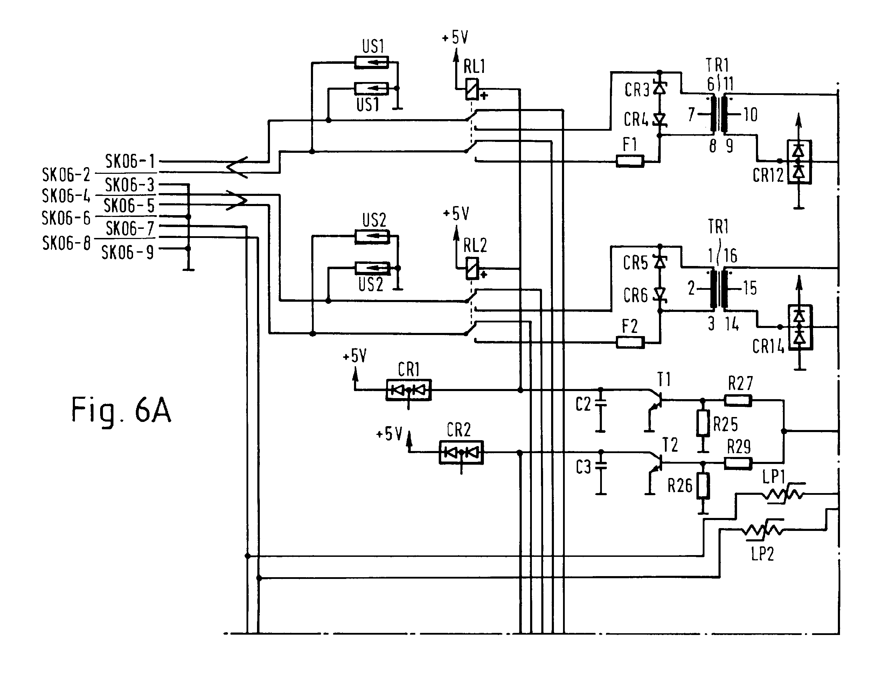

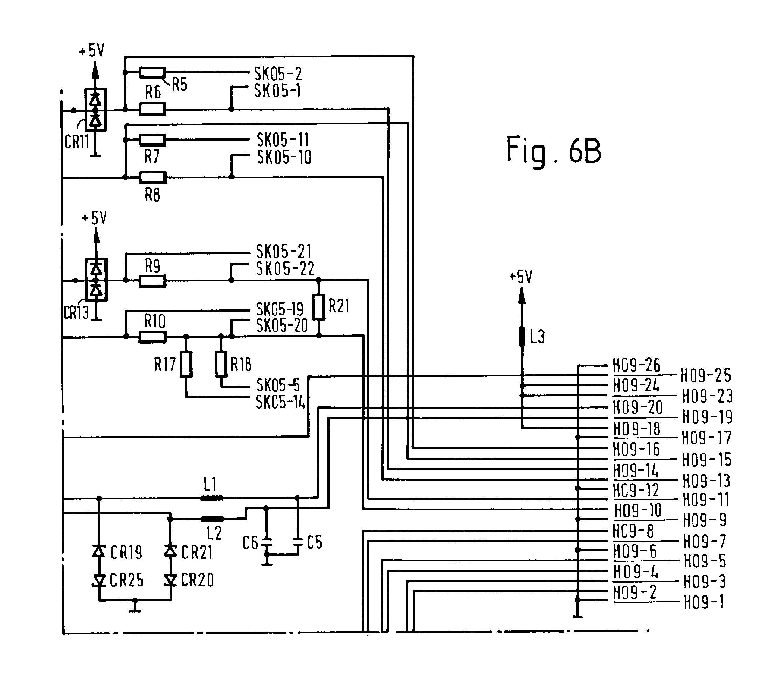

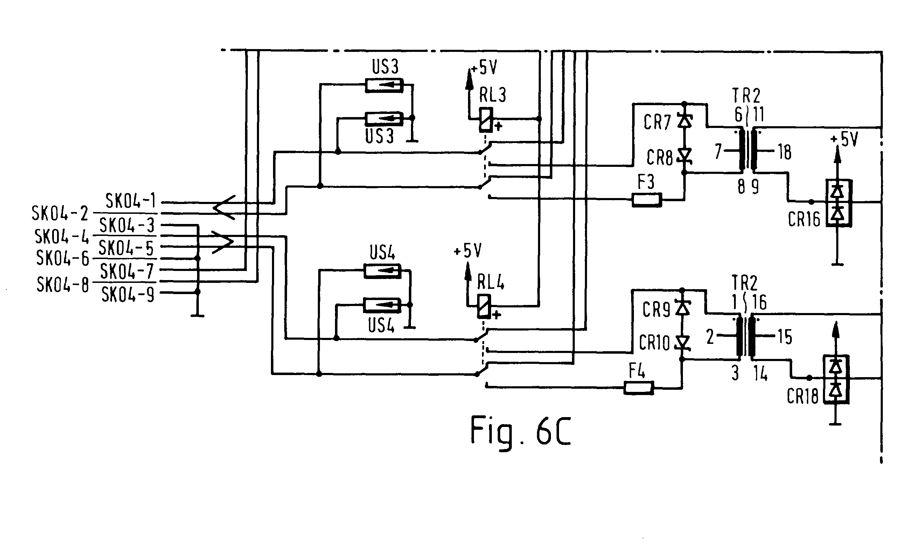

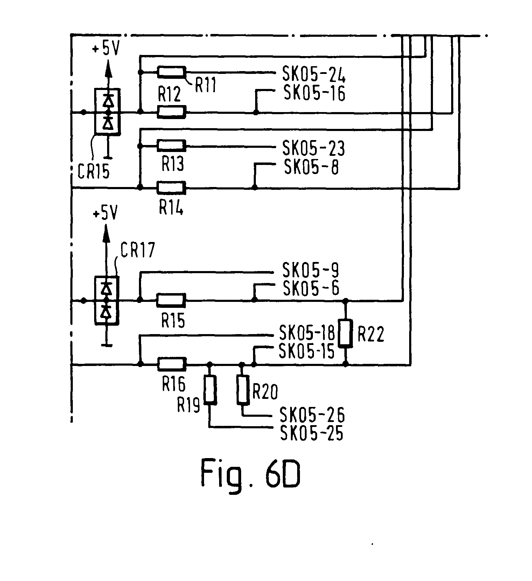

Figure 6 shows how Figures 6A, 6B, 6C and 6D assemble to provide a schematic circuit diagram of the interface unit of Figure 1;

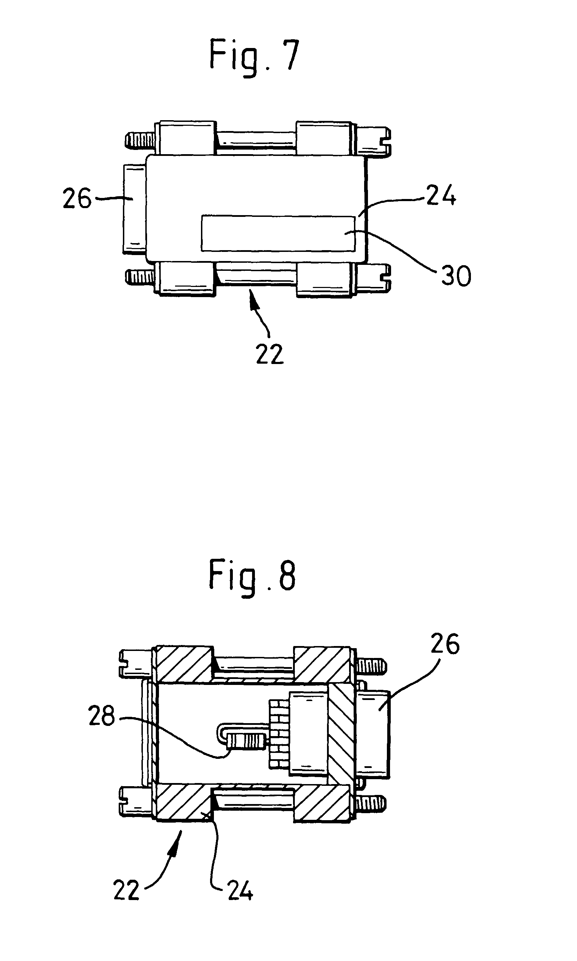

Figure 7 is a plan view of an adapter embodying the invention; and
Figure 8 is a cross section of the adapter of Figure 7.

Referring to the drawings, base station equipment comprises a radio unit 2 containing a transmitter 4, a power amplifier 6, a receiver 8, a duplexer 9, a signal processor other associated equipment (not shown) and a control processor 10 which has a main processor board 12 and an interface board 14. The interface board 14 contains all the interfaces necessary to connect the processor board to the outside world and is connected to the processor board by cable 16 and connector H09.

The interface board 14 is connected by uplink digital transmission lines to a land based telecommunications switching network (not shown) via D-type connector socket SK06, pins SK06-1 and SK06-2 being connected to a transmit transmission line via which signals are sent to the switching network. Pins SK06-4 and SK06-5 are connected to a receive transmission line via which signals are received from the switching network. Pins 7 and 8 receive clock signals and the remaining pins are grounded.

In order that two or more radio units can be daisy chained together, downlink connections are provided for one or more radio units via D-type connector SK04. Pins SK04-1 and SK04-2 are connected to a transmit transmission line via which signals are sent to the further radio unit(s) in the daisy chain. Pins SK04-4 and SK04-5 are connected to a receive transmission line via which signals are received from the further radio unit(s) in the chain. Pins 7 and 8 transmit clock signals and the remaining pins are grounded.

The data lines on pins SK06-1, SK06-2, SK06-4 and SK06-5 and SK04-1, SK04-2, SK04-4 and SK04-5, are protected by high voltage lighting protectors US1 to US4. The clock signals are connected straight through from SK06-7 and SK06-8 to SK04-7 and SK04-8. In order that radio units further on in the daisy chain are not put out of action in the event that this radio unit fails, relays RL1 to RL 4 are arranged to switch data lines on pins SK06-1, SK06-2, SK06-4 and SK06-5 through to pins SK04-1, SK04-2, SK04-4 and SK04-5, in the event of a fault being signalled on pin H09-25.

Low voltage surge protection is provided by fuses F1 to F4 and back to back zener diode pairs GR3 to GR10. DC isolation id provided by two transformers TR1 and two transformers TR2.

The data lines are clamped to 0 to +5v or -5 to 0v by diode pairs GR12 to GR18.

The impedance seen on the data lines at the connectors SK04 and SK06 is setable by configuring a network of resistors R5 to R22. The network is configured by interconnecting ports appearing on pins of a connector SK05.

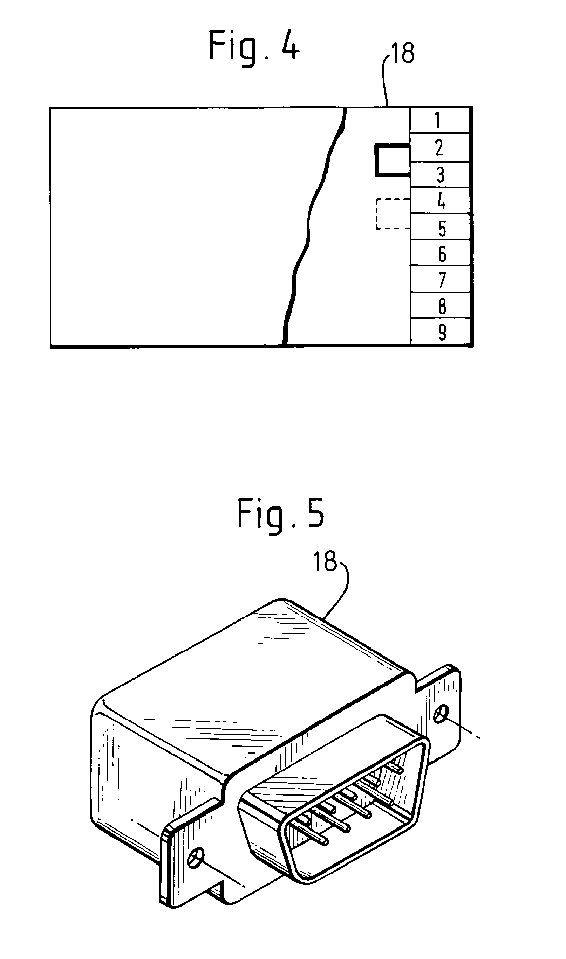

In the present embodiment impedances of 75 ohms, 100 ohms and 120 ohms are provided. The interconnections are made by a configuration adaptor 18 shown in Figures 4 and 5.

The adapter 18 has a D-type connector PL05 complimentary to SK05. Two or more of the pins are connected by internal links 20 in a pattern which identifies to the processor what impedance is required. It is preferable that one of the permissible patterns is not no connections at all so that if an installer forgets to connect an adapter a fault will register.

The adapter is conspicuously marked with an indication 68 of the impedance its use will select.

The interconnections needed to configure the resistor network to provide the different impedances are shown in the following table:

| VARIANT | CONNECT PINS |
|---|---|
| E1-75 (75 ohms) | 21-22 |
| | 6-9 |
| | 19.20 |
| | 15-18 |
| | 5-23 |
| | 6-26 |
| | 12-13 |
| | 3-13 |
| T1-100 (100 ohms) | 1-2 |
| | 16-24 |
| | 10-11 |
| | 8-23 |
| | 21-22 |
| | 6-9 |
| | 19-20 |
| | 15-18 |
| | 12-13 |
| E-120 (120 ohms) | 14-22 |
| | 6-25 |
| | 3-13 |

Battery is connected to the processor board via a connector SK03 and cable 22.

At the end of a daisy chain of two or more radio units, the clock pair appearing at connector pins SK04-7 and SK04-8 need to be terminated in a matching impedance or there will be reflections up the data link which will cause malfunction. For this purpose an adapter 22 is provided. The adapter has body 24 on which is mounted a D-type connector plug 26 complimentary to socket SK04. Inside the body 26 pins corresponding to pins SK04-7 and SK04-8 are interconnected by a resistor 28 having an impedance matching that of the data transmission line e.g. 75 ohms, 100 ohms or 120 ohms. The resistance value of the resistor is marked on a label 30 on the exterior of the body 24.

Although in the present example, the impedance of the uplink go and return pairs appearing at pins SK06-1 and SK06-2, and at SK06-4 and SK06-5, are effectively terminated by the the impedance matching network of resostors R5 to R22, it is possible in other examples, not shown, for the pairs to be treated in the same way as the clock pair.

## Claims

1. Base station equipment for a mobile telecommunications system, having a plurality of radio units each comprising an enclosure containing a radio transmitter, a radio receiver and a processor for communicating with mobile terminals via the transmitter and the receiver and with a switching centre via an uplink data port and a transmission line having a nominal impedance, a downlink data port being connected directly by at least one pair of conductors to the uplink data port so that two or more radio units can be daisy chained together, a downlink port of a first radio unit being connected to an uplink port of a second radio unit, so that the second can communicate with the switching centre via the first, the last radio unit in the chain, being most remote in the chain from the switching centre, having connected to its downlink port an adapter connecting the conductors in the or each pair with an impedance having the nominal impedance of the transmission line.

2. Base station equipment as claimed in claim 1, wherein the downlink port comprises a connector and the adapter has a complimentary connector.

3. Base station equipment as claimed in claim 1 or 2, wherein the adapter carries an indication of the nominal impedance.

4. Base station equipment as claimed in any preceding claim, wherein go and return data pairs in the uplink and downlink ports are interfaced by impedance matching networks, clock signal pairs in both ports being directly interconnected by a conductive pair.

5. An adapter for use in the base station equipment of any preceding claim, comprising a connector having at least two pins interconnected by an impedance, and having no lead operative to connect any pin not so interconnected to any functional network.

6. An adapter as claimed in claim 5, which bears an indication of the value of the impedance.
